# EUROPÄISCHE PATENTSCHRIFT

(11) **EP 0 919 789 B1**
(45) Veröffentlichungstag und Bekanntmachung des Hinweises auf die Patenterteilung: **14.08.2002**
(21) Anmeldenummer: 97120812.9
(22) Anmeldetag: 27.11.1997
(51) Int. Cl.: G01D 3/02

(54) **Sensoreinrichtung**
Sensor device
Dispositif capteur

(43) Veröffentlichungstag der Anmeldung: 02.06.1999
(73) Patentinhaber: Micronas GmbH, 79108 Freiburg (DE)
(72) Erfinder: Blossfeld, Lothar, Dipl. Phys., 79874 Breitnau (DE)
(74) Vertreter: Sauer, Wolfgang

(56) Entgegenhaltungen:
- DE-A- 4 338 709
- GB-A- 2 116 325
- PATENT ABSTRACTS OF JAPAN vol. 96, no. 5, 31.Mai 1996 & JP 08 005397 A (SONY CORP), 12.Januar 1996,

## Beschreibung

Die Erfindung betrifft eine elektronische Sensoreinrichtung, die eine Fühlereinrichtung enthält, die je nach Ausführung auf eine physikalische Größe reagiert, z.B. Kraft, Druck, Beschleunigung, Magnetfeld oder Strahlung im optischen und nichtoptischen Bereich. In Abhängigkeit von der gemessenen Größe stellt sie am Ausgang ein elektrisches Ausgangssignal zur Verfügung. Oft sind die zu messenden Größen relativ großen Hindergrundsignalen überlagert, die entweder konstant sind oder sich nur sehr langsam ändern. Derartige Hindergrundsignale können aber auch Offsetfehler der Fühler- oder der gesamten Meßanordnung sein. Wenn das Sensorsignal rein statisch ist, dann ist eine Trennung nur mittels eines Chopperprinzips möglich. Wenn das Nutzsignal jedoch ein von Null abweichendes Frequenzspektrum aufweist, das gegenüber den Frequenzen des Hindergrundsignals deutlich höher liegt, dann ist an sich eine einfache Trennung über Filtereinrichtungen möglich, im einfachsten Fall durch eine kapazitive Signalankopplung an den jeweiligen Sensor oder die einzelnen Verstärkungsstufen.

Bei monolithisch integrierten Sensorschaltungen, die neben dem eigentlichen elektrophysikalischen Sensor auch eine Signalverarbeitungsschaltung auf dem selben Chip enthalten, ist eine kapazitive Ankopplung in der Regel nicht möglich, weil die Gesamtschaltung üblicherweise aus galvanisch gekoppelten Stufen gebildet ist. Es muß daher auf andere Weise sichergestellt sein, daß der Arbeitsbereich der einzelnen Schaltungsstufen durch den Gleichsignalpegel des Hindergrundsignals nicht überschritten wird. Dies wird mittels des bekannten Differenzverstärkerprinzips erreicht, bei dem das dem Gleichsignalpegel überlagerte Sensorsignal unter Verwendung eines Bezugspegels als Differenzsignal verarbeitet wird. Der Arbeitsbereich des Differenzverstärkers muß hierzu mindestens so groß wie das maximal mögliche Sensorsignal sein. Für die nachfolgenden Stufen ist der störende Gleichsignalpegel dann nicht mehr vorhanden oder zumindest sehr klein. Es ist daher zweckmäßig, den Gleichsignalpegel möglichst am Anfang des Signalpfades zu unterdrücken, wobei die Verstärkung gering sein kann, und die erforderliche Verstärkung und Signalverarbeitung in die nachfolgenden Stufen zu verlegen.

Ein besonders kritischer Anwendungsfall für derartige Sensoreinrichtungen ergibt sich beispielsweise bei Sensoren, die im Maschinenbau oder Kraftfahrzeugwesen bei rotierenden Bauteilen zur Messung der jeweiligen Rotationsgeschwindigkeit oder Position verwendet werden. Dabei werden häufig Magnetfeldanordnungen eingesetzt, die den Sensor mit einem starken Gleichmagnetfeld (= Backbias-Feld) vorspannen. Ein Geber-Zahnrad aus Eisenmaterialien moduliert bei der Rotation den magnetischen Fluß im Sensor. Diese Modulation wird vom Sensor als Nutzsignal ausgewertet. Typisch liegt dabei das prozentuale Verhältnis von Modulation zu Cleichmagnetfluß zwischen 1 % und 10 %.

Ähnlich ist es bei der Verwendung von kapazitiven Sensoren zur Bestimmung von Kraft, Druck oder Beschleunigung, weil dort die vorhandene Grundkapazität mehr oder weniger stark durch die zu messende Größe moduliert wird. Ähnlich ist es bei optischen Sensoren, die gegebenenfalls eine Helligkeitsmodulation bei einer relativ großen Grundhelligkeit erkennen müssen.

Durch das ungünstige Verhältnis von moduliertem Signal zu unmoduliertem Gleichsignal werden hohe Anforderungen an Genauigkeit und Stabilität der Sensoreinrichtung gestellt. Ein nachträglicher Abgleich von Herstellungs- und Einbautoleranzen sowie der Toleranzen, die sich im Betrieb durch Temperatur- oder Alterungseffekte ergeben, ist zwar machbar, wird in der Regel jedoch möglichst vermieden. Üblichere Lösungen dieser Probleme sind dynamische Sensoreinrichtungen, die nur dynamische Signale auswerten können. Der für die Kompensation des Gleichsignalpegels erforderliche Bezugspegel wird bei diesem Verfahren mittels einer Regelschaltung gebildet. Hierzu wird beispielsweise das Ausgangssignal des Eingangsverstärkers tiefpaßgefiltert und auf dessen Kompensations- oder Bezugseingang zurückgeführt. Wenn dem Eingangsverstärker als Sensorsignal ein Differenzsignal zugeführt ist, dann ist der zugehörige Rückführungseingang in der Regel an einem der Differenzeingänge mittels einer Summationsschaltung ausgeführt. Solche Sensoreinrichtungen können nur Signale verarbeiten, die eine Mindestfrequenz aufweisen.

In vielen Systemen, insbesondere bei magnetfeldempfindlichen Sensoren, muß außer der Bewegung oder Rotation auch ein Stillstand erkannt werden. Ferner darf bei positionsabhängigen Steuerungen meist auch keine Information verloren gehen, beispielsweise wann nach der Inbetriebnahme der erste Zahn eines Geberzahnrades am Sensor vorbeiläuft. Derartige Anwendungen finden sich beispielsweise im Automobilsektor bei der Motorsteuerung, bei der Antiblockiereinrichtung oder im Tachometerbereich.

Für viele Anwendungsfälle reicht es jedoch aus, wenn die untere Grenzfrequenz, bis zu der die Sensoreinrichtung arbeiten muß, im Bereich von einigen 1/10 Hz liegt. Dynamische Sensoren, die für diese niederen Frequenzbereiche geeignet sind, müssen mit einem sehr langsamen Regelverhalten ausgerüstet sein, wodurch sie nach dem Betriebsbeginn längere Zeit für die Erfassung der Sensorsignale blind sind.

In JP-A-08/005397 ist als nächstliegender Stand der Technik eine Sensoreinrichtung beschrieben, die einen ersten und zweiten Betriebszustand mit unterschiedlichen Funktionsabläufen aufweist. Im ersten Betriebszustand, der beim Anlegen der Versorgungsspannung ausgelöst wird, wird in einer Einstelleinrichtung mittels eines Zählers und eines vom Zählerinhalt gesteuerten Digital-Analog-Umsetzers der Arbeitsbereich eines an den Sensor angeschlossenen Gleichspannungsverstärkers an den Gleichsignalpegel des Sensors angepaßt. Der Zählvorgang des zurückgesetzten Zählers und damit der erste Betriebszustand wird erst beendet, wenn ein Komparator das Erreichen des Sensorsignalgleichpegels angezeigt hat. Bis zu diesem Zeitpunkt verharrt das Ausgangssignal im zugehörigen Ausgangsgrenzpegel des Gleichspannungsverstärkers. Im zweiten Betriebsbereich liefert die Sensoreinrichtung ein Ausgangssignal in Abhängigkeit von der relativen Lage des Sensorsignals zum eingestellten Gleichbezugswert.

In GB-A 2 116 325 ist eine Sensoreinrichtung für die Bestimmung von Drehzahlen beschrieben. Das bei Zahnradsensoren die abgegriffenen Sensorsignale von der jeweiligen Drehzahl absolut und relativ abhängig sind, ergibt dies eine Eigenverstellung, die für die exakte Winkelbestimmung bei einer elektronischen Zündanlage hinderlich ist. Es wird daher eine Kompensation der Eigenverstellung über den gesamten Drehzahlbereich angegeben. Der Grundgedanke dieser Kompensation besteht darin, daß die Referenzspannung für den Operationsverstärker veränderbar ist, indem zur Referenzspannungserzeugung über zwei Stromspiegel ein Referenzstrom eingespeist wird, dessen Größe von der jeweiligen Drehzahl abhängig ist.

In DE-A 43 38 709 ist schließlich eine Einrichtung beschrieben, bei der ein Offsetfehler eines Verstärkers korrigiert wird. Hierzu ist die Schaltung in zwei Schaltungsteile unterteilt, die nach dem Einschalten unterschiedlich in Betrieb genommen werden. Während der ersten Betriebsphase des Offsetfehlerabgleichs wird unter Abschaltung des einen Schaltungsteils ein Ruhepegel bestimmt und kapazitiv gespeichert. Während der zweiten Betriebsphase wird der Ruhepegel als Korrekturwert übernommen und das eigentliche Sensorsignal mit dem offsetkompensierten Verstärker bestimmt.

Die Aufgabe der Erfindung besteht darin, eine verbesserte Sensoreinrichtung bereitzustellen, die sehr tiefe Signalfrequenzen erfaßt, andererseits aber nach dem Einschalten in sehr kurzer Zeit betriebsbereit ist und eine hohe Verträglichkeit und Empfindlichkeit gegenüber großen Hindergrundsignalen aufweist.

Diese Aufgabe wird nach den Merkmalen des Anspruchs 1 wie folgt gelöst:

Eine Sensoreinrichtung enthält eine Steuereinrichtung, die mindestens einen ersten und einen zweiten Betriebszustand definiert, dabei ist der erste Betriebszustand insbesondere durch das Anlegen einer Versorgungsspannung auslösbar und die Sensoreinrichtung enthält ferner eine Einstelleinrichtung, die im ersten Betriebszustand den Arbeitsbereich einer Meßeinrichtung mittels eines Einstellwertes an den jeweiligen Gleichsignalpegel eines Sensorsignals mindestens grob anpaßt und im zweiten Betriebszustand einen mittleren Sensorsignalwert zur Feinnachführung ermittelt, der den im ersten Betriebszustand festgehaltenen Einstellwert ergänzt oder ersetzt. Die Ausgangsschaltung erzeugt im ersten Betriebszustand ein erstes Ausgangssignal, das vom Sensorsignal unabhängig vorgebbar ist, und im zweiten Betriebszustand ein zweites Ausgangssignal, das von einem dem mittleren Sensorsignalwert überlagerten Sensorsignal abhängig ist.

Die Vorgabe mindestens eines ersten und eines zweiten Betriebszustandes eröffnet die Möglichkeit, daß das Betriebsverhalten der Sensoreinrichtung optimal an den Einschaltzustand und an den normalen Betriebszustand angepaßt werden kann.

Kompromisse wie bei rein dynamischen Sensoreinrichtungen bezüglich der Regelgeschwindigkeit und der Forderungen nach niederen Grenzfrequenzen sind nach der Erfindung nicht erforderlich. Im ersten Betriebszustand wird mittels der Einstelleinrichtung sehr rasch ein mittlerer Sensorsignalwert gefunden, der im zweiten Betriebszustand nur noch den langsamen Driftänderungen folgen muß. Die Bestimmung des mittleren Sensorsignalwertes im ersten Betriebszustandes kann auf verschiedene Weise erfolgen. Beispielsweise kann die Regelsteilheit sehr erhöht werden. Ferner ist es möglich, daß der Gleichsignalpegel mittels einer Abtast-Halteschaltung direkt gemessen wird und dieser analog gespeicherte Wert dann dem Bezugssignaleingang zugeführt wird. Ein ähnliches Verfahren verwendet keinen Analogspeicher, sondern einen Digitalspeicher, wobei der zuvor bestimmte Gleichsignalpegel mittels eines Analog/Digital-Umsetzers digitalisiert wird. Dieses Verfahren sieht zunächst umständlich aus, bei einer digitalen Signalverarbeitung innerhalb der Sensoreinrichtung können jedoch die dafür vorhandenen Stufen mitverwendet werden. Es reicht zudem aus, wenn die Auflösung im ersten Betriebszustand relativ grob bleibt, weil die Feinnachführung im zweiten Betriebszustand erfolgen kann. Ein ähnliches digitales Verfahren führt im ersten Betriebszustand eine sukzessive Approximation durch, um den Gleichsignalpegel aufzufinden. Auch hier kann die sukzessive Approximation beendet werden, wenn der ermittelte Einstellwert kleiner als die zu erwartende Signalamplitude ist. Für die Feinnachführung, die nur relativ langsamen Änderungen folgen muß, eignet sich ein "tracking"-Wandler, der Änderungen in LSB Schritten ausführt.

Die zeitliche Dauer des ersten Betriebszustandes wird von der Steuereinrichtung bestimmt, die entweder überprüft, ob das Signal nach dem Differenzverstärker genügend dicht beim Signalwert Null liegt, oder die für den ersten Betriebszustand eine feste Zeit vorgibt, die bei der digitalen Lösung von einem internen Taktsignal gesteuert ist. Nach 8 bis 10 Takten, die etwa 100 µs entsprechen, sollte dieser Einstellvorgang für Zahnradsensoren abgeschlossen sein.

Nachdem im ersten Betriebszustand der Gleichsignalpegel des Sensorsignals gleichsam kompensiert ist, kann im zweiten Betriebszustand die Sensoreinrichtung sofort das überlagerte Sensorsignal erkennen und daraus ein analoges oder digitales Ausgangssignal bilden. Damit im ersten Betriebszustand das Ausgangssignal nicht zufällig hin und her geschaltet wird, ist in diesem Zeitbereich für das Ausgangssignal ein definierter Signalzustand vorgesehen, beispielsweise ein logischer "1"- oder "0"-Zustand, eventuell auch ein potentialfreien Tri-State-Zustand. Gegebenenfalls wird dieser Signalzustand zu Beginn des zweiten Betriebszustandes so lange beibehalten, bis der erste Signalwechsel im überlagerten Sensorsignal erkannt wird.

Weitere Vorteile ergeben sich für die Sensoreinrichtung, wenn im zweiten Betriebszustand mittels eines Amplitudendetektors die Amplitude des überlagerten Sensorsignals bestimmt wird. Mit Hilfe dieses Amplitudenwertes kann eine Hystereseschwelle für Schaltsignalanwendungen verändert werden oder die Verstärkung im Signalpfad wird an die Größe des überlagerten Sensorsignals angepaßt. Diese automatische Anpassung macht die Sensoreinrichtung sehr unempfindlich gegen Betriebs- und Einbautoleranzen, die sich auf die Signalhöhe auswirken.

Bei der Verwendung der Sensoreinrichtung in magnetischen Zahnradsensoren ist die Erkennung von Frequenzen von einigen 1/10 Hz bis 10 kHz erwünscht. Damit der von der Sensoreinrichtung erfassbare Frequenzbereich möglichst groß wird, ist es wichtig, daß die Signalnachführung für den mittleren Sensorsignalwert etwa an die jeweilige Signalfrequenz gekoppelt ist. Dies wird vorteilhaft dadurch erreicht, daß zwischen den einzelnen Ausgangssignalen der jeweilige mittlere Sensorsignalwert nicht verändert wird. Der mittlere Sensorsignalwert soll sich dabei nur in einem Zeitintervall ändern, das beim Schnittpunkt des überlagerten Sensorsignals mit dem mittleren Sensorsignalwert beginnt und zweckmäßigerweise mit dem Erreichen eines relativen Extremwertes des überlagerten Sensorsignalwerts endet.

Wird im zweiten Betriebszustand während eines längeren Zeitintervalls kein Ausgangssignal gebildet, dann löst bei einer Weiterbildung der Erfindung die Steuereinrichtung einen dritten Betriebszustand aus, bei dem der mittlere Sensorsignalwert langsam in Richtung des wahrscheinlich verlorenen mittleren Sensorsignalwertes geführt wird. Die Regelrichtung ist dabei duch das Vorzeichen des Sensorsignals nach dem Differenzverstärker oder am Ausgang bestimmt.

Die Nachführung des mittleren Sensorsignalwertes kann über vorgegebene Schwellwerte oder Filterschaltungen von Signalstörungen unabhängiger gemacht werden.

Damit der mittlere Sensorsignalwert bei kurzzeitigen Spannungseinbrüchen oder nach dem Abschalten nicht verloren wird, ist es zweckmäßig, ihn als digitaler Wert in einer mitintegrierten dynamischen und/oder nichtflüchtigen Speichereinrichtung festzuhalten. Bei jedem neuen Startvorgang steht dieser gespeicherter Wert dann zur Verfügung, so daß im ersten Betriebszustand die Nachführung schneller erfolgen kann oder der gefundene Wert genauer wird. Selbstverständlich können auch andere Einstell- und/oder Regelparameter der Einstelleinrichtung in der Speichereinrichtung festgehalten werden. Die nichtflüchtige Speicherung ermöglicht, daß auch nach längeren Signalstörungen oder Unterbrechungen der Versorgungsspannung, die Sensoreinrichtung sofort wieder voll betriebsbereit ist. Kurzzeitige Signalstörungen oder kurzzeitige Unterbrechungen der Versorgungsspannung können auch mittels der dynamischen Speicherung der Einstell- und/oder Regelparameter überbrückt werden. Dynamische Speicher sind mit üblichen CMOS-Herstellungsverfahren ohne zusätzliche Prozeßschritte herstellbar, während nichtflüchtige Speichereinrichtungen aufwendiger herzustellen und zudem nicht beliebig oft schreibbar sind.

Bei Hallsensoren muß gegebenenfalls der "erste Zahn" erkannt werden. Dies ist kaum möglich, wenn während des ersten Betriebszustandes als mittlerer Sensorsignalwert zufällig das maximale Sensorsignal festgehalten wird, das dem Zahndach entspricht, und das Ausgangssignal auf den Null-Pegel festgelegt ist. In diesem Fall wird die Information über den ersten Zahn unterdrückt. Dies läßt sich dadurch unterbinden, daß im zweiten Betriebszustand als Ausgangssignal erstmalig ein Impuls mit vorgegebener Impulsdauer abgegeben wird, wenn eine Abweichung des überlagerten Sensorsignals gegenüber dem im ersten Betriebszustand festgehaltenen mittleren Sensorsignalwert erkannt wird. Auf diese Weise wird sicher die Vorder- oder Rückflanke des ersten Zahnes erkannt und als Information an die nachfolgenden Schaltungen weitergegeben.

Die Erfindung und vorteilhafte Ausgestaltungen werden nun anhand der Figuren der Zeichnung näher erläutert:
Fig. 1 zeigt schematisch als Blockschaltbild ein erstes Ausführungsbeispiel,
Fig. 2 zeigt schematisch als Blockschaltbild ein zweites Ausführungsbeispiel,
Fig. 3 zeigt schematisch als Zeitdiagramm einige Signalverläufe und
Fig. 4 zeigt schematisch als Zeitdiagramm einen mittleren Sensorsignalwert.

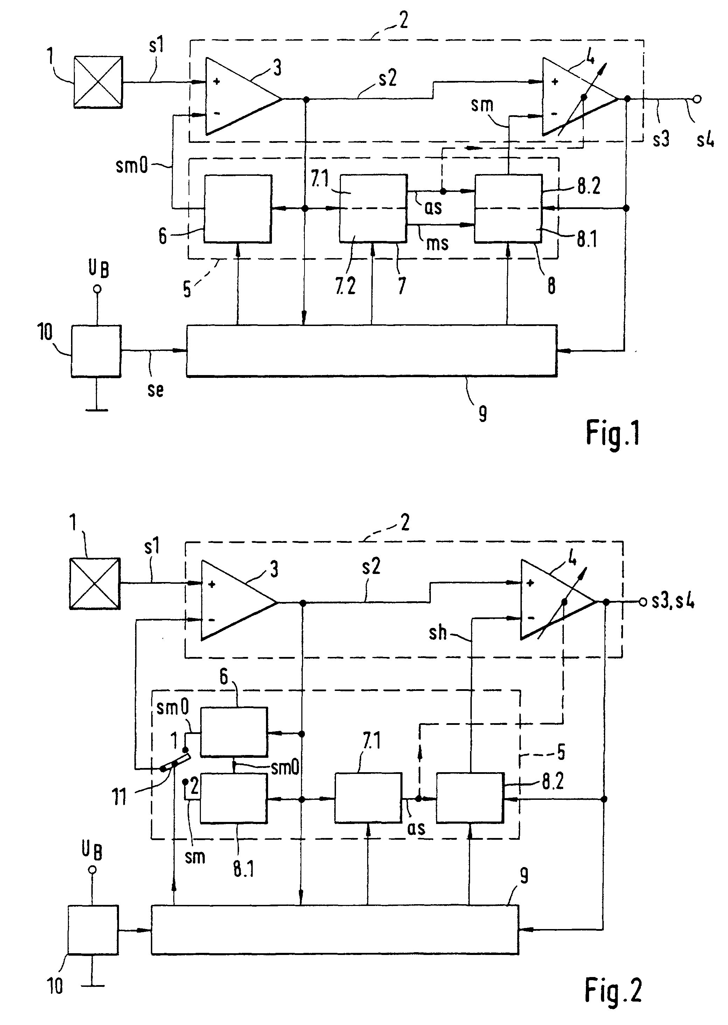

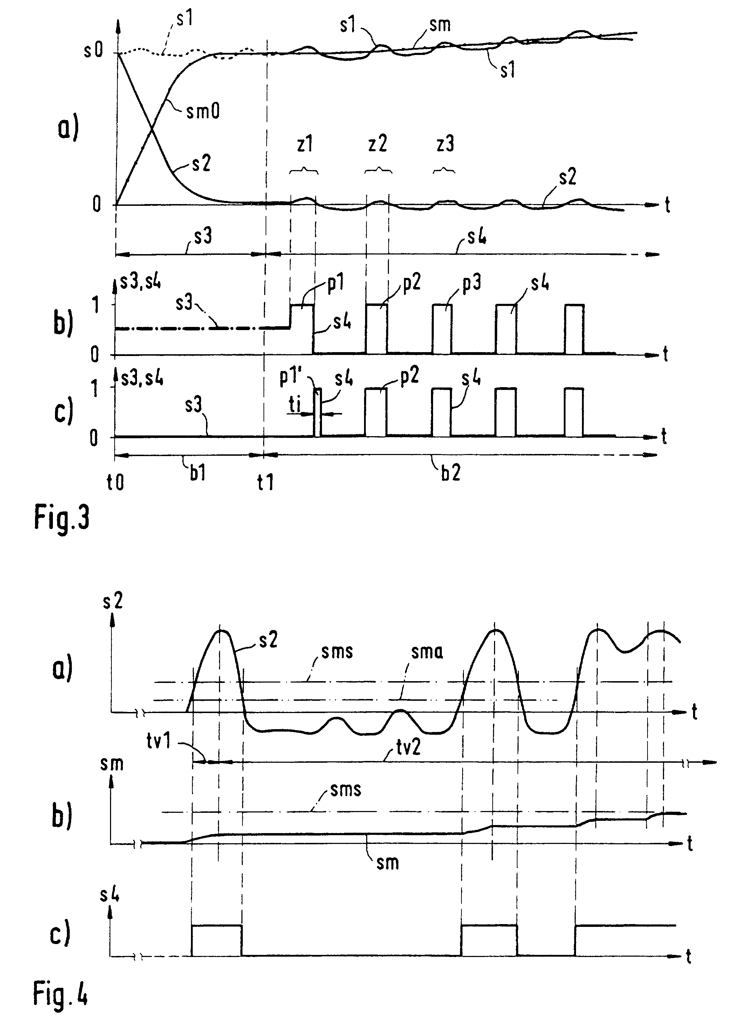

Das Ausführungsbeispiel der Sensoreinrichtung von Fig. 1 enthält im Eingang einen Fühler oder den eigentlichen Sensor 1, dessen Ausgangssignal unipolar oder differenziell, letzteres beispielsweise bei einem Hallsensor, als Sensorsignal s1 einer Meßeinrichtung 2 zugeführt wird. Die Meßeinrichtung 2 enthält einen Eingangsverstärker 3, der im wesentlichen dazu dient, den Gleichsignalpegel s0 (vgl. Fig. 3) des Sensorsignals s1 zu unterdrücken oder zu kompensieren. Im einfachsten Fall wird dies mittels eines Differenzverstärkers erreicht, dessen einem Eingang das Sensorsignal s1 und dessen anderem Eingang der Gleichsignalpegel s0 oder ein nahe dabei liegender Einstellwert sm0 zugeführt wird.

Das Ausgangssignal des Eingangsverstärkers 3 ist im Idealfall identisch mit dem gesuchten Sensorsignal s2, das vom Cleichsignalpegel s0 und von niederen Hindergrund-Signalfrequenzen frei ist. Die Betrachtung der Gleichspannungsfreiheit gilt genau genommen nur dann, wenn auch das ausgangsseitige Ruhepotential des Eingangsverstärkers 3 exakt auf dem Nullpotential liegt. Bei einer unipolaren Ausbildung der Sensoreinrichtung weicht das ausgangsseitige Ruhepotential des Eingangsverstärkers 3 jedoch vom Nullpotential ab und ist durch einen festen Cleichspannungs-Ruhepegel definiert, der für die weitere Betrachtung jedoch nicht stören soll. Die Unterdrückung des Gleichsignalpegels s0 im Eingangsverstärker 3 erfordert gegebenenfalls einen großen eingangsseitigen Aussteuerbereich, so daß die eigentliche Signalverstärkung in einen zweiten Verstärker oder in die Ausgangsschaltung 4 verlegt werden muß. Wenn es sich um eine lineare Schaltung handelt, dann ist im zweiten Betriebszustand b2 als Ausgangssignal s4 ein Signal abgreifbar, das dem überlagerten Sensorsignal s2 proportional ist. Für Schalteranwendungen wird jedoch ein Komparator als Ausgangsschaltung 4 verwendet, der ein Schaltsignal s4 erzeugt, das von der Polarität des überlagerten Sensorsignals s2 und gegebenenfalls auch von Schaltschwellen abhängig ist.

Die Kompensation des Gleichsignalpegels s0 erfolgt mittels einer Einstelleinrichtung 5, die gegebenenfalls auch die Schaltschwellen beeinflußt. Wesentliche Teile der Einstelleinrichtung 5 sind ein Gleichpegeldetektor 6, eine Analyseschaltung 7 und ein Einsteller 8. Der Gleichpegeldetektor 6 dient dazu, bei der Betriebsaufnahme der Sensoreinrichtung möglichst rasch den Gleichsignalpegel s0 oder einen ähnlichen Spannungswert sm0 aufzufinden und der Meßeinrichtung 2 zuzuführen. Dies erfolgt während eines ersten Betriebszustandes b1, der von einer Steuereinrichtung 9 ausgelöst wird, wenn ihr ein Einschaltdetektor 10 über ein Einschaltsignal se signalisiert, daß eine Versorgungsspannung U_{B} an die Sensoreinrichtung angeschlossen worden ist. Das Ende des ersten Betriebszustandes wird entweder durch ein vorgegebenes Zeitintervall b1 bestimmt oder dadurch, daß das überlagerte Sensorsignal s2 kleiner als ein vorgegebener Wert geworden ist. Die einzelnen Stufen der Einstelleinrichtung 5 können lineare Stufen sein. Da in der Einstelleinrichtung 5 mindestens ein Gleichpegelwert aus dem Cleichpegeldetektor 6 und/oder einer Nachlaufschaltung 8.1 zu speichern ist, sind bei einer analogen Realisierung in der Einstelleinrichtung 5 mitintegrierte Kondensatoren vorzusehen, um diese analogen Werte zu speichern. Da mittels der Sensoreinrichtung auch sehr niederfrequente Sensorsignale s1 erfaßt werden sollen, dürfen die Kondensatoren nicht zu klein sein. Unkritischer ist eine digitale Verarbeitung in der Einstelleinrichtung, die zwar einen Analog/Digital-Umsetzer für das überlagerte Sensorsignal 2 erfordert und mindestens einen Digital/Analog-Umsetzer für die Bildung der analogen Ausgangssignale der Einstelleinrichtung 5. Der erhöhte Aufwand ist jedoch gerechtfertigt, weil die interne Signalverarbeitung und Speicherung dann über einfache Digitalschaltungen erfolgt. Der Gleichpegeldetektor 6 kann hierbei als sukzessiver Approximator ausgebildet sein, der sehr rasch den Gleichsignalpegel s0 auffindet und diesen Wert digital als festen Einstellwert sm0 speichert. In dem Ausführungsbeispiel nach Fig. 2 wird dieser Einstellwert sm0 durch die Nachlaufschaltung 8.1 den tatsächlichen Signalverhältnissen nachgeführt und wird daher laufend überschrieben. Der Einstellwert sm0 in Fig. 1 stellt gleichsam einen Grundabgleich dar, der bei einem Magnetfeldsensor dem vorhandenen Backbias-Feld entspricht. Dieses bleibt im wesentlichen konstant, so daß nur eine relativ geringe Drift durch die Nachlaufschaltung 8.1 ausgeglichen werden muß.

Die digitale Verarbeitung ermöglicht auch, daß in der Analyseschaltung 7 ein Amplitudendetektor 7.1 und ein Mittelwertbildner 7.2 auf einfache Weise über die Speicherung von relativen Extremwerten gebildet werden kann. Die Subtraktion der Extremwerte liefert einen doppelten Amplitudenwert as und die Addition der Extremwerte liefert den doppelten Wert eines medianen Mittelwertes ms. Der eigentliche Amplituden bzw. Mittelwert läßt sich aus diesen Werten durch eine einfache Skalierung mit dem Faktor 1/2 gewinnen. Zur Unterdrückung von Störungen können die ermittelten Werte as, ms noch gefiltert werden.

Eine Änderung des gespeicherten mittleren Sensorsignalwertes sm bzw. sm0 erfolgt ferner durch ein Änderungsssignal, das von der Steuereinrichtung 9 dann abgegeben wird, wenn sich innerhalb eines vorgegebenen Überwachungszeitraumes tv2 (vgl. Fig. 4) die gespeicherten Werte nicht geändert haben. Es ist aber auch möglich, daß über interne Filterschaltungen relative Extremwerte erkannt werden, die dann in der Analyseschaltung 7 zur Bildung eines neuen Mittelwertes ms dienen. Bei der digitalen Lösung enthält die Steuereinrichtung 9 selbstverständlich einen Zeitgeber, der den Ablauf der einzelnen Zeitintervalle bestimmt. Wenn für die Einstelleinrichtung nichtflüchtige Speicher verwendet werden, kann die Zeit für den ersten Betriebszustand b1 erheblich verkürzt werden, denn wenn die Werte einmal gespeichert sind, stehen sie bei jedem weiteren Einschaltvorgang als Vorabgleich zur Verfügung.

In Fig. 2 ist ein zweites Ausführungsbeispiel der Sensoreinrichtung dargestellt, das im wesentlichen die gleichen Teilschaltungen wie das Ausführungsbeispiel von Fig. 1 enthält. Der Hauptunterschied besteht darin, daß die Kompensation des Gleichsignalpegels s0 und der Driftnachlauf im ersten und zweiten Betriebszustand b1, b2 nur im Eingangsverstärker 3 erfolgt. Mittels eines Schalters 11 wird während des ersten Betriebszustandes b1 das Ausgangssignal sm0 des Gleichpegeldetektors 6 und im zweiten Betriebszustand b2 das Ausgangssignal sm der Nachlaufschaltung 8.1 auf den Bezugseingang des Eingangsverstärkers 3 geschaltet. Die entsprechenden Schalterpositionen 1, 2 werden von der Steuereinrichtung 9 im ersten bzw. zweiten Betriebszustand b1 bzw. b2 aktiviert. Wenn die Ausgangsschaltung 4 als Komparator arbeiten soll, dann ist ihr Bezugseingang mit einem Hystereseeinsteller 8.2 verbunden, der die jeweilige Hystereseschwelle sh in Abhängigkeit vom Amplitudenwert as einstellt.

Fig. 3 zeigt in drei Zeitdiagrammen a), b) und c) typische Signalverläufe eines Hallsensors in einer Drehzahlmeßeinrichtung. Im Zeitdiagramm a) ist ein Sensorsignal s1 dargestellt, das aus einem mit einem Gleichmagnetfeld vorgespannten Zahnradsensor stammt. Der Gleichsignalpegel s0 entspricht beispielsweise einem Magnetfeld von 200 mTesla und das überlagerte Sensorsignal s2 etwa einer Amplitude von 5 mTesla. Der mittlere Sensorsignalwert sm steigt infolge eines Driftvorganges leicht an. Der Driftvorgang ist in der Zeichnung der Deutlichkeit wegen überhöht dargestellt. Während des ersten Betriebszustandes b1 steigt der gemessene Einstellwert sm0 rasch auf den Gleichsignalpegel s0 an, während das Ausgangssignal s2 des Eingangsverstärkers 3 sich dem Nullwert nähert. Der Kompensationszustand ist spätestens zum Zeitpunkt t1 erreicht, so daß das Ausgangssignal des Eingangsverstärkers 3 dem überlagerten Sensorsignal s2 entspricht, so daß daraus das Schaltsignal s4 gebildet werden kann. Entsprechend dem ersten, zweiten und dritten Zahn z1, z2, z3 des Zahnradgebers werden dann die Impulse p1, p2, p3 usw. ausgelöst. Damit während des ersten Betriebszustandes b1 das Ausgangssignal s3 nicht unnötig hin und her geschaltet wird, wird es mittels der Steuereinrichtung 9 oder der Einstelleinrichtung 5 auf einen festen Spannungspegel gelegt oder in einen sogenannten Tri-State-Zustand gebracht. Im Zeitdiagramm Fig. 3b wird ein fester Zwischenpegel vorgegeben, so daß das Signal des ersten Zahnes z1 einen ersten Impuls p1 auslöst, unabhängig davon, auf welchen Zahnbereich sich der Einstellwert sm0 bezieht. Eine bessere Erkennung des ersten Zahnes erlaubt der Signalverlauf nach Fig. 3c, bei dem im ersten Betriebszustand b1 das Ausgangssignal s3 vorteilhafterweise auf den Nullpegel geklemmt wird. Vom ersten Zahn z1 wird dann mittels der Abweichung des Sensorsignals s2 vom gespeicherten Einstellwert sm0 die vorbeilaufende Vorder- oder Rückflanke des ersten Zahnes erkannt und als erster Impuls p1' mit einer vorgegebenen Impulslänge ti abgegeben. Die an die Sensoreinrichtung angeschlossenen Schaltungen erhalten somit eine Information über den ersten Zahn z1. Die nachfolgenden Impulse p2, p3 usw. erfolgen dann wie in Fig. 3b.

In Fig. 4 wird anhand von drei Zeitdiagrammen a), b) und c) die Nachführung des mittleren Sensorsignals sm etwas genauer dargestellt. Das erste Zeitdiagramm a) zeigt das überlagerte Sensorsignal s2 mit einigen relativen Extremwerten in positiver und negativer Richtung. Der optimale Mittelwert sms wird auch als medianer Mittelwert bezeichnet, weil er unabhängig vom Tastverhältnis im mittleren Signalbereich liegt. Zur Verdeutlichung ist der arithmetische Mittelwert sma eingezeichnet, der das Tastverhältnis berücksichtigt und daher unsymmetrisch zu den relativen Extremwerten liegt. Wenn dieser Wert sma als Schaltschwelle verwendet wird, dann können bereits geringe Stör- oder Rauschsignale falsche Ausgangssignale s4 auslösen. Im Zeitdiagramm Fig. 4b ist in überhöhter Form dargestellt, wie sich der mittlere Sensorsignalwert sm beim Auftreten der relativen Extrema des überlagerten Sensorsignals s2 ändert. Wenn die relativen Extremwerte relativ lang andauern, ist es nicht zweckmäßig, daß die Nachführung des mittleren Sensorsignalwertes sm während der ganzen Dauer der Ausgangsimpulse s4 stattfindet. Die Nachregelung ist daher sinnvollerweise an die Signalflanken gekoppelt und endet etwa, wenn das Sensorsignal s2 den relativen Extremwert erreicht. Der im Mittelwertbildner 7.2 gebildete Mittelwert ms wird nicht unmittelbar als Kompensationswert für den Gleichsignalpegel s0 verwendet, sondern dieser Wert wird mittels eines Regelfilters, z.B. einer PID-Anordnung, modifiziert. Der kleinste Änderungswert entspricht einem LSB-Schritt, wobei die Änderungsgeschwindigkeit auch von dem Amplitudenwert as abhängig sein kann.

Wenn während des zweiten Betriebszustandes b2 während einer längeren Zeit keine Überschreitung des mittleren Signalwertes sm stattfindet, dann ist der Geber entweder völlig in Ruhe oder der mittlere Sensorsignalwert sm liegt infolge irgendeiner Störung auf einem völlig falschen Signalpegel. Hier ermöglicht ein von der Steuereinrichtung 9 nach einem Intervall tv2 eingeleiteter dritter Betriebszustand, daß der mittlere Sensorsignalpegel sm allmählich wieder in Richtung des Sollwertes sms zurückgeführt wird. Sowie das mittlere Sensorsignal sm innerhalb des überlagerten Sensorsignals s2 liegt, übernimmt die normale Funktion der Nachlaufschaltung 8.1 wieder den Nachlauf. Dies wirkt sich auf das Zeitintervall tv2 wie eine Rücksetzfunktion aus, so daß der langsame Nachlauf des dritten Betriebszustandes nicht mehr wirksam wird.

Die Ausführungsbeispiele nach Fig. 1und Fig. 2 können auch so abgewandelt werden, daß die Ausgangsstufen 4 mehr als zwei Ausgangspegel erzeugen können, um innerhalb einer von einem Zahradgeber abhängigen Ausgangsdatenfolge weitere Informationen zu übertragen. Die Ausgangsstufen 4 können auch als geschaltete Stromsenken ausgebildet sein, die vorzugsweise bei Zweibeinsensoren die jeweilige Stromaufnahme zur Informationsweitergabe steuern.

## Patentansprüche

1. Sensoreinrichtung zur Erzeugung eines Ausgangssignals (s3, s4) in Abhängigkeit von einem Sensorsignal (s1), das einem Einstellwert (sm0) überlagert ist, mit
- einer Steuereinrichtung (9), die mindestens einen ersten und einen zweiten Betriebszustand (b1, b2) definiert, dabei ist der erste Betriebszustand insbesondere durch das Anlegen einer Versorgungsspannung (U_{B}) auslösbar, und
- einer Einstelleinrichtung (5), die im ersten Betriebszustand (b1) den Arbeitsbereich einer Meßeinrichtung (2) an einen jeweiligen Gleichsignalpegel (s0) des Sensorsignals (s1) anpaßt, indem der Meßeinrichtung (2) ein dem Gleichsignalpegel (s0) entsprechender Einstellwert (sm0) zugeführt ist,
- **gekennzeichnet durch** folgende Merkmale:
- der Einstellwert (sm0) entspricht einer groben Einstellung oder Nachführung des Gleichsignalpegels (s0),
- im zweiten Betriebszustand (b2) ist der Einstellwert (sm0) **durch** einen in einer Nachlaufschaltung (8.1) ermittelten mittleren Sensorsignalwert (sm), der einer Feinnachführung entspricht, ergänzt oder ersetzt, und
- eine Ausgangsschaltung (4) bildet im ersten Betriebszustand ein erstes Ausgangssignal (s3), das vom Sensorsignal (s1) unabhängig vorgebbar ist, und im zweiten Betriebszustand (b2) ein zweites Ausgangssignal (s4), das vom Sensorsignal (s1) abhängig ist.

2. Sensoreinrichtung nach Anspruch 1, **dadurch gekennzeichnet, daß** ein mit der Meßeinrichtung (2) gekoppelter Amplitudendetektor (7.1) im zweiten Betriebszustand (b2) die Amplitdude des überlagerten Sensorsignals (s2) ermittelt.

3. Sensoreinrichtung nach Anspruch 2, **dadurch gekennzeichnet, daß** der Amplitudendetektor (7.1) eine Hystereseschwelle (sh) und/oder die Verstärkung der Meßeinrichtung (2) steuert.

4. Sensoreinrichtung nach einem der Ansprüche 1 bis 3, **dadurch gekennzeichnet, daß** die Einstelleinrichtung (5) den mittleren Sensorsignalwert (sm) im zweiten Betriebszustand (b2) jeweils in einem ersten Zeitintervall (tv1) ändert, das mit einem Schnittpunkt des überlagerten Sensorsignales (s2) mit dem mittleren Sensorsignalwert (sm) beginnt und das etwa mit dem Erreichen eines relativen Extremwertes des überlagerten Sensorsignals (s2) endet.

5. Sensoreinrichtung nach Anspruch 4, **dadurch gekennzeichnet, daß** die Änderung des mittleren Sensorsignalwertes (sm) in einem von der Steuereinrichtung (9) ausgelösten dritten Betriebszustand erfolgt, wenn innerhalb eines vorgegebenen zweiten Zeitintervalles (tv2) kein Vorzeichenwechsel des überlagerten Sensorsignals (s2) stattfindet, wobei die Änderungsrichtung des mittleren Sensorsignalwertes (sm) durch das Vorzeichen des überlagerten Sensorsignals (s2) oder des zweiten Ausgangsignals (s4) bestimmt ist.

6. Sensoreinrichtung nach einem der Ansprüche 1 bis 3, **dadurch gekennzeichnet, daß** die Einstelleinrichtung (5) den mittleren Sensorsignalwert (sm) nur dann ändert, wenn der neue mittlere Sensorsignalwert (sm) um einen vorgegebenen Betrag vom vorhandenen mittleren Sensorsignalwert (sm) abweicht.

7. Sensoreinrichtung nach Anspruch 6, **dadurch gekennzeichnet, daß** der mittlere Sensorsignalwert (sm) und/oder der Einstellwert (sm0) als digitaler Wert in einer mitintegrierten, insbesondere nichtflüchtigen, Speichereinrichtung gespeichert ist.

8. Sensoreinrichtung nach Anspruch 7, **dadurch gekennzeichnet, daß** Einstellund/oder Regelparameter in einer mitintegrierten, insbesondere nichtflüchtigen, Speichereinrichtung als digitale Werte gespeichert sind.

9. Sensoreinrichtung nach Anspruch 1, **dadurch gekennzeichnet, daß** die Ausgangsschaltung (4) im zweiten Betriebszustand (b2) als zweites Ausgangssignal (s4) einen Impuls (p1') mit einer vorgegebenen Impulsdauer (ti) abgibt, wenn erstmalig eine Abweichung des überlagerten Sensorsignales (s2) gegenüber dem im ersten Betriebszustand festgehaltenen mittleren Sensorsignalwert (sm) von der Meßeinrichtung (2) erkannt ist.

10. Sensoreinrichtung nach Anspruch 3, **dadurch gekennzeichnet, daß** die Hystereseschwelle (sh) als Speicherwert vorgegeben ist und daß diese Hystereseschwelle während des zweiten Betriebszustandes (b2) in Abhängigkeit vom Amplitudenwert (as) modifiziert wird.

## Claims

1. A sensor device for providing an output signal (s3, s4) in response to a sensor signal (s1) superimposed on a setting value (sm0), comprising
- a controller (9) defining at least a first operating operating state (b1) and a second operating state (b2), the first operating state being triggerable in particular by application of a supply voltage (U_{B}), and
- a setting facility (5) which in the first operating state (b1) adapts the operating range of a measuring facility (2) to a respective DC level (s0) of the sensor signal (s1) by supplying the measuring facility (2) with a setting value (sm0) corresponding to the DC level (s0),
- **characterized by** the following features:
- the setting value (sm0) corresponds to a coarse setting or adjustment of the DC level (s0);
- in the second operating state (b2), the setting value (sm0) is supplemented or replaced by a mean sensor signal value (sm) which is determined in a tracking circuit (8.1) and corresponds to a fine adjustment; and
- an output circuit (4) produces in the first operating state a first output signal (s3) which is selectable independently of the sensor signal (s1), and in the second operating state (b2) a second output signal (s4), which is dependent on the sensor signal (s1).

2. A sensor device as set forth in claim 1, **characterized in that** in the second operating state (b2), an amplitude detector (7.1) coupled to the measuring facility (2) determines the amplitude of the superimposed sensor signal (s2).

3. A sensor device as set forth in claim 2, **characterized in that** the amplitude detector (7.1) controls a hysteresis threshold (h) and/or the gain of the measuring facility (2).

4. A sensor device as set forth in any one of claims 1 to 3, **characterized in that** in the second operating state (b2), the setting facility (5) changes the mean sensor signal value (sm) in a first time interval (tv1) which begins with an intersection of the superimposed sensor signal (s2) and the mean sensor signal value (sm) and ends approximately with the attainment of a relative extreme value of the superimposed sensor signal (s2).

5. A sensor device as set forth in claim 4, **characterized in that** the change in the mean sensor signal value (sm) takes place in a third operating state, which is initiated by the controller (9) if no change of the sign of the superimposed sensor signal (s2) occurs within a predetermined second time interval (tv2), with the direction of the change in the mean sensor signal value (sm) being determined by the sign of the superimposed sensor signal (s2) or of the second output signal (s4).

6. A sensor device as set forth in any one of claims 1 to 3, **characterized in that** the setting facility (5) changes the mean sensor signal value (sm) only if the new mean sensor signal value (sm) differs from the existing mean sensor signal value (sm) by a predetermined amount.

7. A sensor device as set forth in claim 6, **characterized in that** the mean sensor signal value (sm) and/or the setting value (sm0) are stored as digital values in an on-chip memory device, particularly in a nonvolatile memory device.

8. A sensor device as set forth in claim 7, **characterized in that** the setting and/or control parameters are stored as digital values in an on-chip memory device, particularly in a nonvolatile memory device.

9. A sensor device as set forth in claim 1, **characterized in that** in the second operating state (b2), the output circuit (4) delivers as the second output signal (s4) a pulse (p1') of predetermined duration (ti) when a deviation of the superimposed sensor signal (s2) from the mean sensor signal value (sm) stored in the first operating state is detected by the measuring facility (2) for the first time.

10. A sensor device as set forth in claim 3, **characterized in that** the hysteresis threshold (sh) is preset as a stored value, and that in the second operating state (b2), this hysteresis threshold is modified as a function of the amplitude value (as).

## Revendications

1. Dispositif capteur destiné à la production d'un signal de sortie (s3, s4) en fonction d'un signal de capteur (s1) qui est superposé à une valeur de réglage (smo) et comportant :
- un dispositif de commande (9) qui définit au moins un premier et un deuxième états de fonctionnement (b1, b2), le premier état de fonctionnement (b1) pouvant être déclenché, en particulier, par l'application d'une tension d'alimentation (U_{B}) et
- un dispositif de réglage (5), qui, dans le premier état de fonctionnement, adapte le domaine de travail d'un dispositif de mesure (2) à chaque fois à un niveau de signal d'égalité (sO) par le fait que l'on envoie, au dispositif de mesure (2), une valeur de réglage (smO) correspondant au niveau de signal d'égalité (sO)
**caractérisé par** les particularités suivantes :
- la valeur de réglage (smO) correspond à un réglage grossier ou à une poursuite du niveau de signal d'égalité (sO),
- dans le deuxième état de fonctionnement (b2), la valeur de réglage (smO) est complétée ou remplacée par une valeur moyenne de signal de capteur (sm) qui est déterminée dans un circuit de poursuite (8.1) et qui correspond à une poursuite fine et
- un circuit de sortie (4) forme, dans le premier état de fonctionnement (b1), un premier signal de sortie (s3) qui peut être défini de manière indépendante du signal de capteur (s1) et, dans le deuxième état de fonctionnement (b2), un deuxième signal de sortie (s4) qui est fonction du signal de capteur (s1).

2. Dispositif capteur selon la revendication 1, **caractérisé en ce qu'**un détecteur d'amplitude (7.1), qui est couplé avec le dispositif de mesure, (2) détermine, dans le deuxième état de fonctionnement (b2), l'amplitude du signal (s2) de superposition du signal de capteur (s1) avec la valeur de réglage (smO).

3. Dispositif capteur selon la revendication 2, **caractérisé en ce que** le détecteur d'amplitude (7.1) commande un seuil d'hystérésis (sh) et/ou l'amplification du dispositif de mesure (2).

4. Dispositif capteur selon l'une quelconque des revendications 1 à 3, **caractérisé en ce que** le dispositif de réglage (5) modifie la valeur moyenne de signal de capteur (sm) dans le deuxième état de fonctionnement (b2), à chaque fois pendant un premier intervalle de temps (tv1) qui commence à un point d'intersection du signal (s2) de superposition du signal de capteur (s1) avec la valeur moyenne de signal de capteur (sm) et se termine sensiblement quand on a atteint une valeur extrême relative du signal (s2) de superposition du signal de capteur (s1).

5. Dispositif capteur selon la revendication 4, **caractérisé en ce que** la modification du signal (s2) de superposition du signal de capteur (s1) se produit pendant un troisième état de fonctionnement (b3), qui est déclenché par le dispositif de commande (9), quand, à l'intérieur d'un deuxième intervalle de temps prédéfini (tv2), il ne produit pas de changement de signe du signal (s2) de superposition du signal de capteur (s1), le sens de la modification de la valeur moyenne de signal de capteur (sm) étant déterminée par le signe du signal (s2) de superposition du signal de capteur (s1) ou du deuxième signal de sortie (s4).

6. selon l'une quelconque des revendications 1 à 3, **caractérisé en ce que** le dispositif de réglage (5) modifie la valeur moyenne de signal de capteur (sm) seulement lorsque la nouvelle valeur moyenne de signal de capteur (sm) s'écarte, d'une valeur prédéfinie, de la valeur de la valeur moyenne de signal de capteur (sm) existante.

7. Dispositif capteur selon la revendication 6, **caractérisé en ce que** la valeur moyenne de signal de capteur (sm) et/ou la valeur de réglage (smO) sont mémorisées, sous forme d'une valeur numérique, dans un dispositif de mémoire intégré, en particulier dans une mémoire non volatile.

8. Dispositif capteur selon la revendication 7, **caractérisé en ce que** des paramètres de réglage et/ou de régulation sont mémorisés, sous forme de valeurs numériques, dans un dispositif de mémoire intégré, en particulier dans une mémoire non volatile.

9. Dispositif capteur selon la revendication 1, **caractérisé en ce que** le circuit de sortie (4) fournit, pendant le deuxième état de fonctionnement (b2), en tant que deuxième signal de sortie (s4), une impulsion (p1') ayant une durée d'impulsion prédéfinie (t1), quand on reconnaît pour la première fois un écart du signal (s2) de superposition du signal de capteur (s1) par rapport à la valeur moyenne de signal de capteur (sm) du dispositif de mesure (2) a qui a été enregistrée pendant le premier état de fonctionnement (b1).

10. Dispositif capteur selon la revendication 3, **caractérisé en ce que** le seuil d'hystérésis (sh) est prédéfini sous forme de valeur mémorisée et **en ce que** ce seuil d'hystérésis (sh) est modifié en fonction de la valeur d'amplitude (as) pendant le deuxième état de fonctionnement (b2).
